# EUROPÄISCHE PATENTANMELDUNG

(11) **EP 3 708 413 A1**
(43) Veröffentlichungstag der Anmeldung: **16.09.2020**
(21) Anmeldenummer: 20160658.9
(22) Anmeldetag: 03.03.2020
(51) Int. Cl.: B60L 53/60, H02J 50/80

(54) **VERFAHREN ZUM STARTEN EINES LADEVORGANGS AN EINER LADESTATION**

(30) Priorität: 13.03.2019 DE 102019106400
(71) Anmelder: Innogy SE, 45128 Essen (DE)
(72) Erfinder: Jelitto, Marcel, 46240 Bottrop (DE)
(74) Vertreter: Cohausz & Florack

(57) **Zusammenfassung**

Die Anmeldung betrifft ein Verfahren zum Starten eines Ladenvorgangs an einer Ladestation (102, 202, 402) zum Laden eines Elektrofahrzeugs (108, 208), umfassend Bereitstellen von durch mindestens eine optische Erfassungseinrichtung (110, 210) des Elektrofahrzeugs (108, 208) aufgenommenen Bilddaten, umfassend mindestens ein der Ladestation (102, 202, 402) zugeordnetes optisches Codierungsmerkmal (104, 204, 404), Bestimmen, durch ein Bilddatenauswertemodul (116, 216), einer Ladestationskennung der Ladestation (102, 202, 402), basierend auf den bereitgestellten Bilddaten, und Durchführen eines Ladevorgangsfreigabeprozesses zum Freigeben eines Ladevorgangs an der Ladestation (102, 202, 402) zum Laden des Elektrofahrzeugs (108, 208), basierend auf der bestimmten Ladestationskennung und einer von dem Elektrofahrzeug (108, 208) bereitgestellten Nutzerkennung.

## Beschreibung

Die Anmeldung betrifft ein Verfahren zum Starten eines Ladevorgangs an einer Ladestation zum Laden von Elektrofahrzeugen. Darüber hinaus betrifft die Anmeldung eine Ladevorgangsfreigabeanwendung, ein Ladesystem und eine Verwendung.

Der Aufbau der Ladeinfrastruktur ist von entscheidender Bedeutung für eine flächendeckende Etablierung von Elektromobilität. Dazu ist es insbesondere notwendig, in öffentlichen als auch in teilöffentlichen sowie privaten Räumen Ladestationen für Elektrofahrzeuge in großem Maße zu installieren. In der Regel wird ein mit einem Backendsystem und einer Mehrzahl von Ladestationen installiert.

Neben der Aufstellung von Ladestationen an Straßen und Wegen bietet sich insbesondere die Installierung von Ladestationen in (privaten und öffentlichen) Parkanordnungen an, insbesondere in Form von Parkhäusern. Die Ladestation kann hierbei über mindestens ein festangeschlagenes Ladekabel und/oder über mindestens einen Ladeanschluss verfügen, der mit einem Ladekabel gekoppelt werden kann. Ferner kann eine Ladestation über eine (dauerhafte) Kommunikationsverbindung mit einem zentralen Backendsystem des Ladesystems verfügen.

Um einen Ladevorgang zu starten, ist es beim Stand der Technik zunächst erforderlich, dass der Nutzer eines zu ladenden Elektrofahrzeugs sich an dem Backendsystem authentifiziert. Hierzu ist im Stand der Technik vorgesehen, dass der Nutzer vor dem Start eines Ladevorgangs an einer bestimmten Ladestation eine Kommunikationsverbindung zwischen seinem mobilen Nutzerendgerät und dem Backendsystem herstellt. Über die hergestellte Kommunikationsverbindung können dann zumindest die Authentifizierungsdaten des Nutzers, wie zumindest eine Nutzerkennung und ggf. Passwort etc., sowie die (eindeutige) Ladestationskennung der Ladestation an das Backendsystem übertragen werden.

Wenn das Backendsystem nach einer Überprüfung dieser Daten zu einem positiven Überprüfungsergebnis kommt, wird der Ladevorgang an der Ladestation freigegeben, indem das Backendsystem über eine Kommunikationsverbindung mit der freizugebenden Ladestation eine Freigabenachricht an diese überträgt. Anschließend kann das Elektrofahrzeug bzw. dessen Energiespeicher in herkömmlicher Weise geladen werden.

Um die Ladestationskennung der freizugebenden Ladestation an das Backendsystem zu übertragen, muss der Nutzer sein mobiles Nutzerendgerät nutzen und beispielsweise die Ladestationskennung manuell in das Nutzerendgerät eingeben oder durch eine optische Erfassungseinrichtung des Nutzerendgeräts erfassen. Dies erfordert in der Regel eine Vielzahl von Nutzeraktionen, die die Nutzerfreundlichkeit des Ladevorgangs erheblich reduziert.

Daher liegt der Anmeldung die Aufgabe zugrunde, ein Verfahren zum Starten eines Ladenvorgangs an einer Ladestation zum Laden eines Elektrofahrzeugs zur Verfügung zu stellen, welches die Nutzerfreundlichkeit eines Ladevorgangs verbessert.

Die Aufgabe wird gemäß einem ersten Aspekt der Anmeldung gelöst durch ein Verfahren zum Starten eines Ladenvorgangs an einer Ladestation zum Laden eines Elektrofahrzeugs nach Anspruch 1. Das Verfahren umfasst:
- Bereitstellen von durch mindestens eine optische Erfassungseinrichtung des Elektrofahrzeugs aufgenommenen Bilddaten, umfassend mindestens ein der Ladestation zugeordnetes optisches Codierungsmerkmal,
- Bestimmen, durch ein Bilddatenauswertemodul, einer Ladestationskennung der Ladestation, basierend auf den bereitgestellten Bilddaten, und
- Durchführen eines Ladevorgangsfreigabeprozesses zum Freigeben eines Ladevorgangs an der Ladestation zum Laden des Elektrofahrzeugs, basierend auf der bestimmten Ladestationskennung und einer von dem Elektrofahrzeug bereitgestellten Nutzerkennung.

Im Gegensatz zum Stand der Technik wird anmeldungsgemäß ein Verfahren zum Starten eines Ladenvorgangs an einer Ladestation zum Laden eines Elektrofahrzeugs, welches in nutzerfreundlicherer Weise die Initiierung eines Ladevorgangs erlaubt, indem eine optische Erfassungseinrichtung des Elektrofahrzeugs zum Aufnehmen von Bilddaten von der freizugebenden Ladestation eingesetzt wird und mit Hilfe eines Bilddatenauswertemodul die Ladestationskennung bestimmt wird. Auf die Nutzung eines mobilen Nutzerendgeräts kann verzichtet werden. Die erforderlichen Nutzeraktionen können minimiert werden.

Das Verfahren dient insbesondere zur Initiierung eines Ladevorgangs an einer Ladestation. Eine anmeldungsgemäße Ladestation kann mindestens einen Ladepunkt umfassen, eingerichtet zum Abgeben von elektrischer Leistung (bzw. Energie bzw. Strom). Vorzugsweise kann der Ladepunkt auch zur Aufnahme von elektrischer Leistung eingerichtet sein. Der Ladepunkt kann insbesondere eine elektrische Schnittstelle sein, beispielsweise in Form eines fest angeschlagenen Ladekabels mit einem Ladeanschluss (z.B. Ladestecker) und/oder einem Ladenanschluss zum Anschließen eines Ladekabels (z.B. eine Ladesteckeraufnahme, beispielsweise in Form einer Ladesteckerbuchse). Unter einem fest angeschlagenen Ladekabel ist insbesondere zu verstehen, dass ein Nutzer das Ladekabel nicht zerstörungsfrei von der Ladevorrichtung trennen kann.

Die Ladestation kann eine Ladevorrichtung umfassen, die in herkömmlicher Weise über Komponenten verfügen kann, um einen Stromfluss von einer Stromquelle (z.B. ein öffentliches Stromnetz, Energieerzeuger etc.) über den Ladepunkt und einem Ladekabel zu ermöglichen. Hierdurch kann ein elektrisch betriebenes Fahrzeug bzw. dessen elektrischen Energiespeicher geladen (oder entladen) werden. Unter einem Elektrofahrzeug ist vorliegend ein Fahrzeug zu verstehen, das zumindest teilweise elektrisch betrieben werden kann und einen wiederaufladbaren elektrischen Speicher umfasst.

Die Ladevorrichtung kann in der Ladestation integriert oder als "Wallbox" gebildet sein. Auch kann die gesamte Ladestation als Wallbox oder Ladesäule gebildet sein. Insbesondere kann die Ladevorrichtung ein Teil der Ladestation sein. Auch kann die Ladevorrichtung, insbesondere die Komponenten bzw. die Ladetechnik, in einer Wand oder einem Boden integriert sein. Es versteht sich, dass eine bidirektionale Strom- bzw. Leistungsübertragung über die Ladekabel und die Ladetechnik der Ladevorrichtung erfolgen kann.

Um einen Stromfluss über eine Ladestation an ein Elektrofahrzeug zu ermöglichen, ist eine Freigabe bzw. Freischaltung des Ladevorgangs bzw. der Ladestation erforderlich. Um die Freigabe eines Ladevorgangs an einer bestimmten Ladestation zu bewirken, werden anmeldungsgemäß Bilddaten von der Ladestation und der Umgebung der Ladestation von mindestens einer optischen Erfassungseinrichtung des zu ladenden Elektrofahrzeugs bereitgestellt. Die Bilddaten können vorzugsweise in Form von einem Fotodaten, aber auch in Form von Videodaten bereitgestellt werden. Insbesondere kann die mindestens eine Erfassungseinrichtung die Bilddaten aufnehmen.

Die bereitgestellten (vorzugweise zweidimensionalen) Bilddaten umfassen ein optisches Codierungsmerkmal, welches (eineindeutig) der Ladestation, an der der Ladevorgang freigegeben werden soll, zugeordnet ist. Unter einem optischen Codierungsmerkmal ist eine optische erfassbare Erscheinung zu verstehen, durch die die Ladestation (eineindeutig) identifizierbar ist, ggf. unter Nutzung einer weiteren mit dem Codierungsmerkmal assoziierten Information.

Anmeldungsgemäß können diese bereitgestellten Bilddaten ausgewertet werden, um in den Bilddaten das optische Codierungsmerkmal zunächst zu identifizieren. Dies kann insbesondere durch mindestens ein Mustererkennungsmittel erfolgen, welches eingerichtet sein kann, ein Muster in den Bilddaten zu detektieren, welches zu mindestens einem vorgegebenen Muster und/oder mindestens einem angelernten Muster korrespondiert, das wiederum einem (potentiellen) optischen Codierungsmerkmal einer Ladestation entspricht.

Durch das Bilddatenauswertemodul kann die (eineindeutige) Ladestationskennung der Ladestation, an der der Ladevorgang durchgeführt werden soll, bestimmt werden, insbesondere basierend auf dem detektierten Muster.

Anschließend wird ein Ladevorgangsfreigabeprozess, der insbesondere einen Authentifizierungsschritt umfassen kann, durchgeführt, basierend auf der bestimmten Ladestationskennung und der von dem zu ladenden Elektrofahrzeug, insbesondere einer in dem Elektrofahrzeug integrierten Rechenvorrichtung (z.B. Multimediasystem umfassend Hardware- und Softwaremodule), bereitgestellten (eineindeutigen) Nutzerkennung des Nutzers des Elektrofahrzeugs. Eine Nutzerkennung kann ein Nutzername, eine Fahrzeugkennung des Elektrofahrzeugs des Nutzers etc. sein.

Es versteht sich, dass neben einer Nutzerkennung weitere für die Authentifizierung erforderliche Daten, wie ein Passwort etc., von dem Elektrofahrzeug bereitgestellt werden können.

Unter einer eineindeutigen Ladestationskennung ist insbesondere zu verstehen, dass eine Kennung der Ladestation ladesystemweit, also innerhalb des Ladesystems, nur ein einziges Mal an genau eine Ladestation vergeben ist. Unter einer eineindeutigen Nutzerkennung ist insbesondere zu verstehen, dass eine Kennung ladesystemweit, also innerhalb des Ladesystems, nur ein einziges Mal an genau einen Nutzer(gruppe) vergeben ist.

Gemäß einer ersten Ausführungsform des anmeldungsgemäßen Verfahrens kann die mindestens eine optische Erfassungseinrichtung eine Kamera des Elektrofahrzeugs sein. Vorzugsweise kann die mindestens eine Kamera eine insbesondere ohnehin an dem Elektrofahrzeug für einen weiteren Zweck (beispielsweise zur Unterstützung bei einem Parkvorgang) vorgesehene Kamera verwendet werden. Beispielhafte und nicht abschließende Kameras sind Rückfahrkameras, 360°Kameras, Kameras zur Detektion von Verkehrszeichen und/oder in Türgriffen oder Rückspiegeln integrierte Kameras.

Gemäß einer bevorzugten Ausführungsform des anmeldungsgemäßen Verfahrens kann das mindestens eine optische Codierungsmerkmal ein maschinenlesbarer Code sein. Der maschinenlesbare Code kann insbesondere ein QR-Code sein. Jedoch sind auch andere maschinenlesbarer Codes denkbar, wie Barcodes etc. In dem maschinenlesbaren Code kann die Ladestationskennung enthalten sein. Insbesondere kann in einem Datenteil des QR-Codes zumindest die Ladestationskennung codiert sein. Neben einer einfachen Erfassung und Detektion eines derartigen Codierungsmerkmal ist von Vorteil, dass eine direkte Bestimmung der Ladestationskennung nur basierend auf dem maschinenlesbaren Code erfolgen kann. Es sind keine weiteren Informationen zum Bestimmen der Ladestationskennung erforderlich.

Alternativ oder zusätzlich kann das mindestens eine optische Codierungsmerkmal, gemäß einer Ausführungsform des anmeldungsgemäßen Verfahrens, ein die Ladestation als Ladestation identifizierbares optisches Erscheinungsmerkmal sein, insbesondere eine Außenform der Ladestation und/oder optional eine einer Ladestation zugeordnete Parkplatznummer. Bei Detektion eines optischen Erscheinungsmerkmals (in den bereitgestellten Bilddaten), durch das Bilddatenauswertemodul (beispielsweise durch das Mustererkennungsmittel), kann eine Ortsinformation der detektierten Ladestation bestimmt (insbesondere geschätzt) werden. Anders ausgedrückt kann eine Ortsinformation (beispielsweise in Form von geographischen Koordinaten oder eine andere Ortsinformation, die zumindest ladesystemweit eindeutig einen bestimmten Ort identifizieren kann) für die Ladestation, an der ein Ladevorgang freigegeben werden soll, bestimmt werden. Die Ladestationskennung kann zumindest basierend auf der bestimmten Ortsinformation bestimmt werden.

Besonders bevorzugt kann die Ortsinformation bestimmt werden durch mindestens einen Positionssensor (z.B. GPS-Sensor) des Elektrofahrzeugs und/oder durch Erfassen, durch das Elektrofahrzeug (z.B. eine Kommunikationsschnittstelle des Elektrofahrzeugs, wie eine W-LAN-Schnittstelle, IR-Schnittstelle, RFID-Schnittstelle, 5G Schnittstelle etc.), eines (lokal an der Ladestation vorhandenen) Kommunikationssignals (z.B. eines W-LAN Netzwerks oder eines Kommunikationsmicrogrids (z.B. basierend auf 5G)). Basierend auf der Ortsinformation kann dann die Ladestationskennung an diesem Ort bestimmt werden.

Insbesondere kann das Bestimmen der Ladestationskennung, gemäß einer Ausführungsform, auf der (zuvor) bestimmten Ortsinformation und auf (in einer Ladestationskennungsdatenbank) gespeicherten Zuordnungen zwischen jeweils einer Ladestationskennung einer Ladestation und mindestens einer Ortsinformation der Ladestation basieren. Eine Ladestationskennungsdatenbank kann insbesondere nach einer (bestimmten) Ortsinformation durchsuchbar sein, um eine Ladestationskennung zu bestimmen. Beispielsweise können die Zuordnungen in einer Tabelle gespeichert sein.

Es versteht sich, dass einer Ladestation zwei oder mehr optische Codierungsmerkmale zugeordnet sein können. Ein optisches Codierungsmerkmal ist hierbei insbesondere dann einer bestimmten Ladestation (eindeutig) zugeordnet, wenn aufgrund der räumlichen Beziehung zwischen Ladestation und optischen Codierungsmerkmal unverkennbar ist, dass dieser nur mit einer Ladestation assoziiert sein kann. In einem Fall kann die Zuordnung dadurch erreicht werden, dass das optische Codierungsmerkmal an/auf der Ladestation selbst angeordnet ist und/oder durch die Ladestation (z.B. die (säulenartige) Außenform einer Ladestation) gebildet ist. Auch kann eine Zuordnung durch eine Positionierung des optischen Codierungsmerkmals in unmittelbarer Nähe zur Ladestation (z.B. kleiner 1,5 m, vorzugsweise kleiner 0,5 m) erzielt werden.

Das Bilddatenauswertemodul kann in einem Backendsystem zumindest teilweise implementiert sein. Das Backendsystem kann beispielsweise gebildet sein durch einen oder mehrere (verteilte) Server. In diesem Fall kann die Rechenvorrichtung des Elektrofahrzeugs eingerichtet sein, zum Durchführen des Ladevorgangsfreigabeprozesses ein Aussenden einer Ladevorgangsanfrage (an ein Backendsystem) zu bewirken, wobei die Ladevorgangsanfrage zumindest die aufgenommenen Bilddaten (zur Auswertung durch das Bilddatenauswertemodul) und vorzugsweise die Nutzerkennung (diese könnte auch erst nach einer erfolgreichen Ladestationskennungsbestimmung übertragen werden) enthalten kann.

Gemäß einer besonders bevorzugten Ausführungsform des anmeldungsgemäßen Verfahrens kann das Bilddatenauswertemodul (vorzugsweise in Form eines ausführbaren Softwaremoduls) in einer Rechenvorrichtung des Elektrofahrzeugs intergiert (bzw. implementiert) sein. Das Durchführen des Ladevorgangsfreigabeprozesses kann ein Bewirken eines Aussendens einer Ladevorgangsanfrage (an ein Backendsystem) umfassen, wobei die Ladevorgangsanfrage zumindest die (durch das Bilddatenauswertemodul) bestimmte Ladestationskennung und die Nutzerkennung enthalten kann.

Es versteht sich, dass bei Varianten des anmeldungsgemäßen Verfahrens vorgesehen sein kann, dass zumindest vor einem Aussenden einer Ladevorgangsanfrage, aber auch beispielsweise vor einer Bestimmung der Ladestationskennung oder vor Aufnahme der Bilddaten, der Nutzer das Durchführen des Ladevorgangsfreigabeprozesses (bzw. das Bestimmen der Ladestationskennung oder das Aufnehmen der Bilddaten) durch Betätigung einer Nutzerschnittstelle (Taste, Touchscreen, Spracherkennungsmodul etc.) der Rechenvorrichtung des Elektrofahrzeugs initiieren und/oder bestätigen muss.

Gemäß einer weiteren Ausführungsform des anmeldungsgemäßen Verfahrens kann das Durchführen eines Ladevorgangsfreigabeprozesses ein Überprüfen der Berechtigung zur Durchführung eines Ladevorgangs an der Ladestation umfassen, zumindest basierend auf der bereitgestellten Nutzerkennung und (in einer Nutzerkennungsdatenbank) gespeicherten Nutzerkennungen. Insbesondere kann (in herkömmlicher Weise) eine Authentifizierungsprüfung, insbesondere durch ein Backendsystem, durchgeführt werden. Das Backendsystem kann mindestens eine geeignete Kommunikationseinrichtung aufweisen, um die Ladevorgangsanfrage (welche zumindest die Nutzerkennung und ggf. weitere Authentifizierungsdaten (z.B. Passwort) enthält) zu empfangen.

Nach dem Empfang können die Daten (in herkömmlicher Weise), durch das Backendsystem, überprüft werden. Insbesondere kann die Nutzerkennung und ggf. weitere Daten mit (im Backendsystem) gespeicherten Nutzerkennungen und ggf. weitere Daten von beispielsweise zuvor registrierten Nutzern verglichen werden. Wird eine Korrespondenz, insbesondere Gleichheit, zwischen der erhaltenden Nutzerkennung und ggf. weiteren Daten und den in z.B. Nutzerkonten gespeicherten Nutzerkennungen und ggf. weiteren Daten festgestellt, ist das Überprüfungsergebnis bzw. Authentifizierungsergebnis, positiv. Anders ausgedrückt ist der Nutzer in diesem Fall berechtigt, einen Ladevorgang in dem Ladesystem durchzuführen. Wird keine Korrespondenz festgestellt, ist das Überprüfungsergebnis negativ. Anders ausgedrückt ist der Nutzer nicht berechtigt, einen Ladevorgang in dem Ladesystem durchzuführen.

Bei einem positiven Überprüfungsergebnis kann ein Ladevorgang an der Ladestation freigegeben werden, beispielsweise durch eine Übertragung einer Freigabenachricht an die freizugebende Ladestation (basierend auf der zuvor bestimmten Ladestationskennung). Bei einem negativen Überprüfungsergebnis kann die Aussendung blockiert werden und/oder eine entsprechende Nachricht an das Elektrofahrzeug übertragen. Eine unberechtigte Durchführung eines Ladevorgangs in dem Ladesystem kann erschwert werden, ohne die Nutzerfreundlichkeit zu beeinträchtigen.

Ein weiterer Aspekt der Anmeldung ist eine Ladevorgangsfreigabeanwendung, ausführbar durch mindestens einen Prozessors einer Rechenvorrichtung eines Elektrofahrzeugs. Die Ladevorgangsfreigabeanwendung umfasst mindestens ein Bilddatenauswertemodul eingerichtet zum Bestimmen einer Ladestationskennung, basierend auf durch mindestens eine optische Erfassungseinrichtung des Elektrofahrzeugs aufgenommenen Bilddaten, umfassend mindestens ein der Ladestation zugeordnetes optisches Codierungsmerkmal. Die Ladevorgangsfreigabeanwendung umfasst mindestens ein Ladevorgangsstartmodul eingerichtet zum Bewirken eines Aussendens einer Ladevorgangsanfrage zum Freigeben eines Ladevorgangs an der Ladestation, wobei die Ladevorgangsanfrage zumindest die bestimmte Ladestationskennung und eine von dem Elektrofahrzeug bereitgestellte Nutzerkennung enthält.

Die Ladevorgangsfreigabeanwendung ist insbesondere eine Softwareanwendung, die Instruktionen, Regeln und/oder Befehle enthält, die von mindestens einen Prozessor ausführbar sind. Insbesondere kann eine Ladevorgangsfreigabeanwendung ein zuvor beschriebenes Bilddatenauswertemodul umfassen. Zudem umfasst die Ladevorgangsfreigabeanwendung ein Ladevorgangsstartmodul, insbesondere eingerichtet zum Aussenden einer zuvor beschrieben Ladevorgangsanfrage z.B. an ein Backendsystem.

Die Ladevorgangsfreigabeanwendung kann insbesondere auf einer Rechenvorrichtung des Elektrofahrzeugs, beispielsweise einem Multimediasystem des Elektrofahrzeugs, installierbar sein.

Ein noch weiterer Aspekt der Anmeldung ist ein Ladesystem zum Laden von Elektrofahrzeugen. Das Ladesystem umfasst mindestens eine Ladestation eingerichtet zum Laden von Elektrofahrzeugen. Das Ladesystem umfasst mindestens ein Backendsystem, eingerichtet zum Freigeben eines Ladevorgangs an der Ladestation zum Laden eines Elektrofahrzeugs. Ferner umfasst das Ladesystem mindestens ein Bilddatenauswertemodul eingerichtet zum Bestimmen einer Ladestationskennung, basierend auf durch mindestens eine optische Erfassungseinrichtung des Elektrofahrzeugs bereitgestellten Bilddaten. Das Ladesystem umfasst ein Freigabemodul eingerichtet zum Freigeben eines Ladevorgangs an der Ladestation zum Laden des Elektrofahrzeugs, basierend auf der bestimmten Ladestationskennung und einer von dem Elektrofahrzeug bereitgestellten Nutzerkennung.

Das Ladesystem kann insbesondere gemäß dem zuvor beschriebenen Verfahren betrieben werden, zumindest kann ein Ladevorgang entsprechend diesem Verfahren bei dem Ladesystem gestartet werden.

Ein noch weiterer Aspekt der Anmeldung ist eine Verwendung einer optischen Erfassungseinrichtung eines Elektrofahrzeugs zum Aufnehmen von Bilddaten, umfassend mindestens ein einer Ladestation zugeordnetes optisches Codierungsmerkmal, wobei durch ein Bilddatenauswertemodul eine Ladestationskennung bestimmt wird, basierend auf den aufgenommenen Bilddaten, und ein Ladevorgang an der Ladestation zum Laden des Elektrofahrzeugs freigegeben wird, basierend auf der bestimmten Ladestationskennung und einer von dem Elektrofahrzeug bereitgestellten Nutzerkennung.

Die Merkmale der Ladesysteme, (Software-)Anwendungen, Verwendungen und Verfahren sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das anmeldungsgemäße Verfahren, die anmeldungsgemäße Ladevorgangsfreigabeanwendung, die anmeldungsgemäße Verwendung und das anmeldungsgemäße Ladesystem auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels eines Ladesystems gemäß der vorliegenden Anmeldung,
- Fig. 2: eine schematische Ansicht eines weiteren Ausführungsbeispiels eines Ladesystems gemäß der vorliegenden Anmeldung,
- Fig. 3: ein Diagramm eines Ausführungsbeispiels eines Verfahrens gemäß der vorliegenden Anmeldung,
- Fig. 4a: eine schematische Ansicht eines Ausführungsbeispiel einer Ladestation mit mindestens einem zugeordneten optischen Codierungsmerkmal gemäß der vorliegenden Anmeldung,
- Fig. 4b: eine schematische Ansicht eines weiteren Ausführungsbeispiel einer Ladestation mit mindestens einem zugeordneten optischen Codierungsmerkmal gemäß der vorliegenden Anmeldung,
- Fig. 4c: eine schematische Ansicht eines weiteren Ausführungsbeispiel einer Ladestation mit mindestens einem zugeordneten optischen Codierungsmerkmal gemäß der vorliegenden Anmeldung, und
- Fig. 4d: eine schematische Ansicht eines weiteren Ausführungsbeispiel einer Ladestation mit mindestens einem zugeordneten optischen Codierungsmerkmal gemäß der vorliegenden Anmeldung.

Gleiche Bezugszeichen werden für gleiche Elemente verwendet.

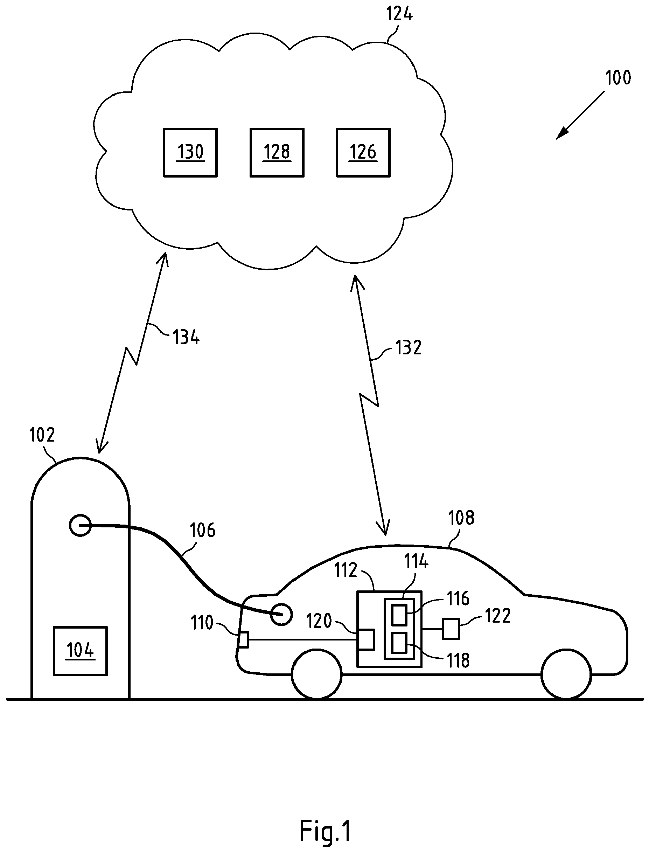

Die Figur 1 zeigt eine schematische Ansicht eines Ausführungsbeispiels eines Ladesystems 100 gemäß der vorliegenden Anmeldung. Das dargestellte Ladesystem 100 umfasst mindestens eine Ladestation 102 und mindestens ein Backendsystem 124, beispielsweise in Form von einem oder mehreren Server/n. Es versteht sich, dass bei anderen Varianten der Anmeldung eine Vielzahl von Ladestationen vorgesehen sein kann.

Die Ladestation 102 umfasst mindestens einen Ladepunkt. Der Ladepunkt kann insbesondere durch einen Ladeanschluss gebildet sein, der eigerichtet ist, um ein Elektrofahrzeug 108 über ein Ladekabel 106 zu laden (oder zu entladen). Die Ladestation 100 umfasst ein Gehäuse, in dem eine Ladevorrichtung (z.B. die Ladetechnik, die mit dem Ladeanschluss gekoppelt ist) integriert sein kann.

Die Ladestation 102 kann über mindestens eine erste (nicht gezeigte) Kommunikationseinrichtung (z.B. umfassend Antenne, Controller etc.) verfügen, die eingerichtet ist mit einer weiteren (nicht gezeigten) Kommunikationseinrichtung (z.B. umfassend Antenne, Controller etc.) des Backendsystems 124 bidirektionale Daten über eine (drahtlose und/oder drahtgebundene) Kommunikationsverbindung 134 auszutauschen.

Der Ladestation 102 ist ein optisches Codierungsmerkmal 104 eindeutig zugeordnet, beispielsweise in Form einer maschinenlesbaren Code 104. Das optische erfassbare Codierungsmerkmal 104 ist vorliegend an einer Außenwand des Gehäuses angeordnet. Beispielsweise kann ein optischer maschinenlesbarer Code 104 in Form eines QR-Codes 104 aufgedruckt, aufgeklebt oder anderweitig aufgebracht sein.

Ferner umfasst das Ladesystem 100 ein Bilddatenauswertemodul 116, eingerichtet zum Bestimmen einer Ladestationskennung der Ladestation 102, basierend auf den von einer optischen Erfassungseinrichtung 110 bereitgestellten Bilddaten. Beispielhaft ist die mindestens eine optische Erfassungseinrichtung 110 eine Kamera 110, wie eine Rückfahrkamera 110, des Elektrofahrzeugs 108. Es versteht sich, dass mehrere Kameras verwendet werden können.

Das Bilddatenauswertemodul 116 kann insbesondere ein Softwaremodul einer Ladevorgangsfreigabeanwendung 114 sein, die von mindestens einem Prozessor 120 der Rechenvorrichtung 112 ausführbar sein. Die Ladevorgangsfreigabeanwendung 114 umfasst ferner ein Ladevorgangsstartmodul 118 in Form eines Softwaremoduls. Zudem kann ein Datenspeicher 122 zum Speichern einer Nutzerkennung und ggf. weiteren Authentifizierungsdaten.

Das Elektrofahrzeug 108 kann über mindestens eine weitere (nicht gezeigte) Kommunikationseinrichtung (z.B. umfassend Antenne, Controller etc.) verfügen, die eingerichtet ist mit einer weiteren (nicht gezeigten) Kommunikationseinrichtung (z.B. umfassend Antenne, Controller etc.) des Backendsystems 124 Daten über eine (drahtlose) Kommunikationsverbindung 132 auszutauschen.

Das Backendsystem 124 kann über mindestens ein Authentifizierungsmodul 128 (insbesondere ein Softwaremodul) zum Durchführen einer Nutzerauthentifizierung vor dem Start eines Ladevorgangs, eine Nutzerkennungsdatenbank 126 eingerichtet zum Speichern von Nutzerkennungen von registrierten und insbesondere berechtigten Nutzern, und ein Freigabemodul 130, eingerichtet zum Bewirken einer Freigabe eines Ladevorgangs an der Ladestation 102, abhängig von einer erhaltenen Nutzerkennung und einer erhaltenen Ladestationskennung, insbesondere abhängig von dem Authentifizierungsergebnis bzw. Überprüfungsergebnis verfügen.

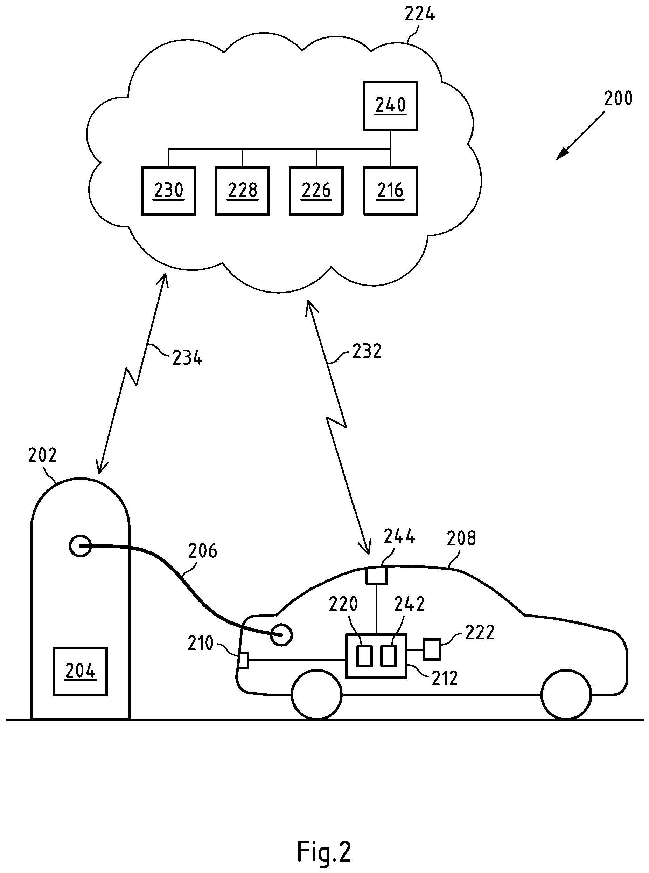

Die Figur 2 zeigt eine schematische Ansicht eines weiteren Ausführungsbeispiels eines Ladesystems 200 gemäß der vorliegenden Anmeldung. Zur Vermeidung von Wiederholungen werden nachfolgend im Wesentlichen nur die Unterschiede zu dem vorherigen Ausführungsbeispiel erläutert und hinsichtlich der anderen Elemente des Ladesystems 200 auf das vorherige Ausführungsbeispiel verwiesen.

Das Ladesystem 200 umfasst ein Bilddatenauswertemodul 216. Im vorliegenden Ausführungsbeispiel ist das Bilddatenauswertemodul 216 in dem Backendsystem 224 (und nicht im Elektrofahrzeug) implementiert. Optional kann das Backendsystem 224 eine Ladestationskennungsdatenbank 240 umfassen, in der Zuordnungen zwischen Ortsinformationen bzw. Informationen über den Aufstellungsort der jeweiligen Ladestationen 102 und die jeweiligen Ladestationskennungen der jeweiligen Ladestationskennung gespeichert sind.

Ferner ist optional vorliegend ein Positionssensor 244 im Elektrofahrzeug 208 implementiert, beispielsweise in GPS-Sensor 244 oder dergleichen.

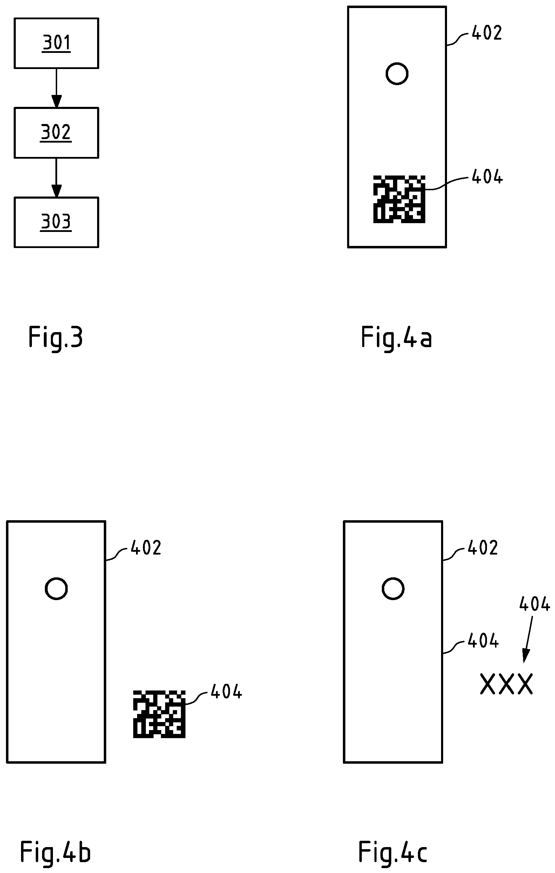

Das Betreiben des Ladesystems 100 und des Ladesystems 200 wird nachfolgend näher mit Figur 3 beschrieben.

In einem ersten Schritt 301 werden von durch mindestens eine optische Erfassungseinrichtung 110, 210 des Elektrofahrzeugs 108, 208 aufgenommenen Bilddaten bereitgestellt, umfassend mindestens ein der Ladestation 102, 202 zugeordnetes optisches Codierungsmerkmal 104, 204. Insbesondere kann durch mindestens eine Kamera als Bilddaten ein Foto (oder ein Video) von der Ladestation 102, 202 und des zugeordneten zugeordnetes optischen Codierungsmerkmal 104, 204 dem Bilddatenauswertemodul 116, 216 zur Verfügung gestellt und insbesondere durch diese beispielsweise beim Parken des Elektrofahrzeugs 108, 208 an der Ladestation 104, 204 aufgenommen werden..

Schematische und beispielhafte Fotos bzw. Bilddaten von Ladestationen 402 sowie beispielhafte zugeordnete optische Codierungsmerkmale 404 sind in den Figuren 4a bis 4d dargestellt.

Aus den in Figur 4a dargestellten Bilddaten geht hervor, dass an der Außenseite Ladestation 402, insbesondere einer Parkfläche zugewandten Außenseite, ein QR-Code 404 angebracht ist, der die eineindeutige Ladestationskennung der Ladestation 402 enthält. Die Zuordnung wird vorliegend dadurch erreicht, dass der QR-Code 404 an der Ladestation 402 direkt angebracht ist.

Aus den in Figur 4b dargestellten Bilddaten geht hervor, dass in unmittelbarer Nähe (vorzugsweise kleiner als ca. 0,5 m) der Ladestation 402 ein QR-Code 404 an einer Wand angebracht ist. Der QR-Code 404 enthält insbesondere die eineindeutige Ladestationskennung der Ladestation 402. Beispielsweise kann sowohl die Ladestation 402 als auch der QR-Code 404 an einer gemeinsamen Wand angeordnet sein. Es versteht sich, dass andere Befestigungen (beispielsweise Ständer etc.) vorgesehen sein können.

In der Figur 4c ist kein QR-Code vorhanden. In dem dargestellten Beispiel wird das optische Codierungsmerkmal 404 durch die (säulenartige) Außenform der Ladestation 402 und/oder eine dem Parkplatz zugeordnete Nummer XXX bzw. Parkplatznummer XXX gebildet. Bei Detektion eines derartigen optischen Erscheinungsmerkmals 404 kann eine Ortsinformation der detektierten Ladestation 402 bestimmt werden, beispielsweise durch einen Positionssensor 244. Alternativ oder zusätzlich kann ein lokal an der Ladestation 404 detektiertes Kommunikationsnetzwerk bzw. ein Kommunikationssignal eines derartigen Kommunikationsnetzwerks zum Bestimmen der Ortsinformation bzw. Aufstellungsposition der Ladestation 402 verwendet werden.

Beispielhaft kann eine Ortsinformation wie folgt bestimmt werden: Auf dem Foto wird, durch das Bilddatenauswertemodul 116, 216, eine Ladestation 402 und eine Parkplatznummer XXX erkannt (vgl. auch Schritt 302). Zusätzlich kann ein vorhandenes Kommunikationssignal, beispielsweise von einem W-LAN-Netzwerk oder 5G Microgrid, durch ein geeignetes Detektionsmittel detektiert und verwendet werden, um die aktuelle Position des Elektrofahrzeugs und damit die Ortsinformation der Ladestation 402 zumindest zu schätzen.

Beispiel: W-LAN Name: Parkhaus A, FRA Flughafen + Parkplatznummer XXX.

Wenn eine entsprechende Ortsinformation in einer Ladestationskennungsdatenbank 240 gespeichert ist und dieser Ortsinformation in der Datenbank 240 eine Ladestationskennung zugeordnet ist, kann die Ladestationskennung der freizugebenden Ladestation 402 hierdurch bestimmt werden.

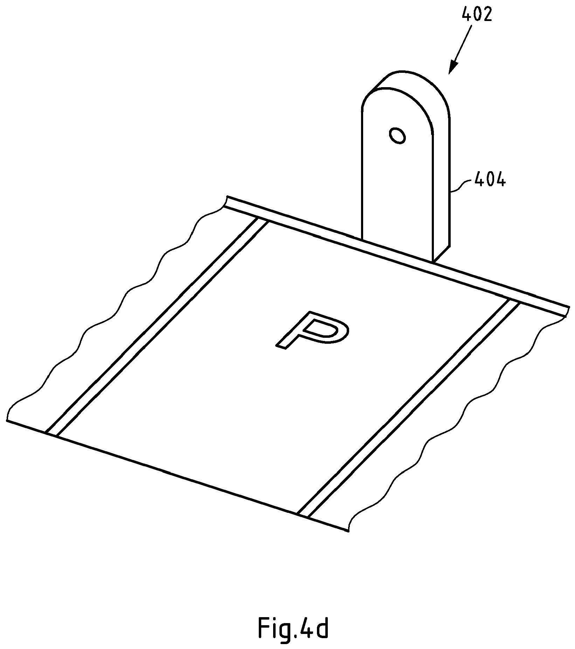

Figur 4d zeigt eine ähnliches Beispiel wie Figur 4c. Der Unterschied besteht insbesondere darin, dass an einem Parkplatz, beispielsweise in einem Ort, eine Ladestation 402 detektiert wurde. Die Ortsinformation der Ladestation 402 kann in diesem Fall vorzugsweise über einen Positionssensor zumindest geschätzt werden, bei Detektion der Ladestation 402 (und beispielsweise der Geschwindigkeit ca. 0 km/h). Wie zuvor beschrieben wurde kann mit dieser Ortsinformation und beispielsweise einer Ladestationskennungsdatenbank 240 die Ladestationskennung der freizugebenden Ladestation 402 bestimmt werden.

Wieder in Bezug zu den Figuren 1 oder 2 und Figur 3, kann im Beispiel nach Figur 2 die Bereitstellung der aufgenommenen Bilddaten in Schritt 201 durch ein Weiterleiten der Bilddaten, durch ein Weiterleitungsmodul 242, der Rechenvorrichtung 212 des Elektrofahrzeugs 208 an das Backendsystem 224 bewirkt werden (beispielsweise zusammen mit der aus einem Datenspeicher 222 auslesbaren Nutzerkennung). Der Datenspeicher 222 kann ein in dem Elektrofahrzeug 208 integriertes Speichermodul oder ein anschließbares Speichermodul sein, wie ein mit der Rechenvorrichtung koppelbares mobiles Nutzerendgerät (z.B. Smartphone, Tablet etc.).

In einem nächsten Schritt 302 wird, durch das Bilddatenauswertemodul 116, 216, die Ladestationskennung der Ladestation 102, 202 bestimmt, an der der Ladevorgang freigegeben werden soll, basierend auf den bereitgestellten Bilddaten. Insbesondere kann zunächst in den Bilddaten ein Muster detektiert werden, welches ein optisches Codierungsmerkmal 102, 204 repräsentiert. Beispielsweise kann dies durch ein Mustererkennungsmittel erfolgen, welches eingerichtet ist, ein Muster in den Bilddaten zu detektieren, welches zu mindestens einem vorgegebenen Muster und/oder mindestens einem angelernten Muster korrespondiert, das einem (potentiellen) optischen Codierungsmerkmal entspricht.

Bei einem maschinenlesbaren Code (z.B. entsprechend Fig. 4a und 4b) kann die darin enthaltene Ladestationskennung dekodiert und somit (unmittelbar) bestimmt werden.

Wie oben beschrieben wurde (z.B. Fig. 4c und 4d) kann die Ladestationskennung auch (indirekt) durch Detektion eines optisches Codierungsmerkmals 404 und durch eine bestimmte Ortsinformation an der Position, an der das optisches Codierungsmerkmal 404 detektiert wird, bestimmt werden.

In einem nächsten Schritt 303 wird ein Ladevorgangsfreigabeprozess zum Freigeben des Ladevorgangs an der Ladestation 102, 202 zum Laden des Elektrofahrzeugs 108, 208 durchgeführt, basierend auf der bestimmten Ladestationskennung und einer von dem Elektrofahrzeug 108, 208 bereitgestellten Nutzerkennung. Wenn das Bilddatenauswertemodul 116 in dem Elektrofahrzeug 108 implementiert ist, kann vorgesehen sein, dass eine Ladevorgangsanfrage von dem Elektrofahrzeug 108 an das Backendsystem 124 übertragen wird, wobei die Ladevorgangsanfrage zumindest die bestimmte Ladestationskennung und die Nutzerkennung (beispielsweise ausgelesen aus dem Datenspeicher 122) enthält.

Insbesondere kann in herkömmlicher Weise die Berechtigung des Nutzers zum Laden an der freizugebenden Ladestation bestimmt werden. Bei einem positiven Überprüfungsergebnis, insbesondere wenn eine erhaltene Nutzerkennung mit einer der gespeicherten Nutzerkennungen von berechtigten Nutzern übereinstimmt, kann der Ladevorgang an der Ladestation 102, 202 freigeben werden. Die Überprüfung kann umfassen, ob der Nutzer an der durch die Ladestationskennung spezifizierte Ladestation 102, 202 zum Laden berechtigt ist. Für eine Freigabe kann insbesondere eine Freigabenachricht an die entsprechende Ladestation 102, 202, basierend auf der (eineindeutigen) Ladestationskennung, über eine Kommunikationsverbindung 134, 234 übertragen werden. Dann kann der Ladevorgang in herkömmlicher Weise durchgeführt werden.

## Patentansprüche

1. Verfahren zum Starten eines Ladenvorgangs an einer Ladestation (102, 202, 402) zum Laden eines Elektrofahrzeugs (108, 208), umfassend:
- Bereitstellen von durch mindestens eine optische Erfassungseinrichtung (110, 210) des Elektrofahrzeugs (108, 208) aufgenommenen Bilddaten, umfassend mindestens ein der Ladestation (102, 202, 402) zugeordnetes optisches Codierungsmerkmal (104, 204, 404),
- Bestimmen, durch ein Bilddatenauswertemodul (116, 216), einer Ladestationskennung der Ladestation (102, 202, 402), basierend auf den bereitgestellten Bilddaten, und
- Durchführen eines Ladevorgangsfreigabeprozesses zum Freigeben eines Ladevorgangs an der Ladestation (102, 202, 402) zum Laden des Elektrofahrzeugs (108, 208), basierend auf der bestimmten Ladestationskennung und einer von dem Elektrofahrzeug (108, 208) bereitgestellten Nutzerkennung.

2. Verfahren nach Anspruch 1, **dadurch gekennzeichnet, dass**
- die mindestens eine optische Erfassungseinrichtung (110, 210) eine Kamera (110, 210) des Elektrofahrzeugs (108, 208).

3. Verfahren nach Anspruch 1 oder 2, **dadurch gekennzeichnet, dass**
- das mindestens eine optische Codierungsmerkmal (104, 204, 404) ein maschinenlesbarer Code (104, 204, 404) ist, insbesondere ein QR-Code (104, 204, 404),
- wobei in dem maschinenlesbaren Code (104, 204, 404) die Ladestationskennung enthalten ist.

4. Verfahren nach einem der vorherigen Ansprüche, **dadurch gekennzeichnet, dass**
- das mindestens eine optische Codierungsmerkmal (104, 204, 404) ein die Ladestation (102, 202, 402) als Ladestation (102, 202, 402) identifizierbares optisches Erscheinungsmerkmal (404) ist, insbesondere eine Außenform (404) der Ladestation (102, 202, 402) und/oder eine einer Ladestation (102, 202, 402) zugeordnete Parkplatznummer (404),
- wobei bei Detektion eines optischen Erscheinungsmerkmals (404), durch das Bilddatenauswertemodul (116, 216), eine Ortsinformation der detektierten Ladestation (102, 202, 402) bestimmt wird, und
- die Ladestationskennung bestimmt wird, zumindest basierend auf der bestimmten Ortsinformation.

5. Verfahren nach Anspruch 4, **dadurch gekennzeichnet, dass**
- die Ortsinformation bestimmt wird durch einen Positionssensor des Elektrofahrzeugs (108, 208) und/oder durch Erfassen, durch das Elektrofahrzeug (108, 208), eines Kommunikationssignals an der Ladestation (102, 202, 402), und/oder
- das Bestimmen der Ladestationskennung auf der bestimmten Ortsinformation und auf gespeicherten Zuordnungen zwischen jeweils einer Ladestationskennung einer Ladestation (102, 202, 402) und mindestens einer Ortsinformation der Ladestation (102, 202, 402) basiert.

6. Verfahren nach einem der vorherigen Ansprüche, **dadurch gekennzeichnet, dass**
- das Bilddatenauswertemodul (116, 216) in einer Rechenvorrichtung (112, 212) des Elektrofahrzeugs (108, 208) intergiert ist, und
- das Durchführen des Ladevorgangsfreigabeprozesses ein Bewirken eines Aussendens einer Ladevorgangsanfrage umfasst, wobei die Ladevorgangsanfrage zumindest die bestimmte Ladestationskennung und die Nutzerkennung enthält.

7. Verfahren nach einem der vorherigen Ansprüche, **dadurch gekennzeichnet, dass**
- das Durchführen eines Ladevorgangsfreigabeprozesses ein Überprüfen der Berechtigung zur Durchführung eines Ladevorgangs an der Ladestation (102, 202, 402) umfasst, zumindest basierend auf der bereitgestellten Nutzerkennung und gespeicherten Nutzerkennungen,
- wobei bei einem positiven Überprüfungsergebnis ein Ladevorgang an der Ladestation (102, 202, 402) freigegeben wird.

8. Ladevorgangsfreigabeanwendung (114), ausführbar durch mindestens einen Prozessors (120) einer Rechenvorrichtung (112, 212) eines Elektrofahrzeugs (108, 208), umfassend:
- mindestens ein Bilddatenauswertemodul (116) eingerichtet zum Bestimmen einer Ladestationskennung, basierend auf durch mindestens eine optische Erfassungseinrichtung (110, 210) des Elektrofahrzeugs (108, 208) aufgenommenen Bilddaten, umfassend mindestens ein der Ladestation (102, 202, 402) zugeordnetes optisches Codierungsmerkmal (104, 204, 404), und
- mindestens ein Ladevorgangsstartmodul (118) eingerichtet zum Bewirken eines Aussendens einer Ladevorgangsanfrage zum Freigeben eines Ladevorgangs an der Ladestation (102, 202, 402), wobei die Ladevorgangsanfrage zumindest die bestimmte Ladestationskennung und eine von dem Elektrofahrzeug (108, 208) bereitgestellte Nutzerkennung enthält.

9. Ladesystem (100, 200), umfassend:
- mindestens eine Ladestation (102, 202, 402) eingerichtet zum Laden von Elektrofahrzeugen (108, 208), und
- mindestens ein Backendsystem (124, 224), eingerichtet zum Freigeben eines Ladevorgangs zum Laden eines Elektrofahrzeugs (108, 208) an der Ladestation (102, 202, 402),
- mindestens ein Bilddatenauswertemodul (116, 216) eingerichtet zum Bestimmen einer Ladestationskennung, basierend auf durch mindestens eine optische Erfassungseinrichtung (110, 210) des Elektrofahrzeugs (108, 208) bereitgestellten Bilddaten, und
- Freigabemodul (130) eingerichtet zum Freigeben eines Ladevorgangs an der Ladestation (102, 202, 402) zum Laden des Elektrofahrzeugs (108, 208), basierend auf der bestimmten Ladestationskennung und einer von dem Elektrofahrzeug (108, 208) bereitgestellten Nutzerkennung

10. Verwendung einer optischen Erfassungseinrichtung (110, 210) eines Elektrofahrzeugs (108, 208) zum Aufnehmen von Bilddaten, umfassend mindestens ein einer Ladestation (102, 202, 402) zugeordnetes optisches Codierungsmerkmal (104, 204, 404), wobei durch ein Bilddatenauswertemodul (116, 216) eine Ladestationskennung bestimmt wird, basierend auf den aufgenommenen Bilddaten, und ein Ladevorgang an der Ladestation (102, 202, 402) zum Laden des Elektrofahrzeugs (108, 208) freigegeben wird, basierend auf der bestimmten Ladestationskennung und einer von dem Elektrofahrzeug (108, 208) bereitgestellten Nutzerkennung.
